# EUROPÄISCHE PATENTANMELDUNG

(11) **EP 1 324 071 A2**
(43) Veröffentlichungstag der Anmeldung: **02.07.2003**
(21) Anmeldenummer: 02028393.3
(22) Anmeldetag: 18.12.2002
(51) Int. Cl.: G01S 17/02

(54) **Verfahren und Vorrichtung zur Erfassung von Objekten**

(30) Priorität: 19.12.2001 DE 10162723
(71) Anmelder: Fachhochschule Hannover, 30459 Hannover (DE)
(72) Erfinder: Dreetz, Ekkehard, Prof. Dr.-Ing., 30457 Hannover (DE); Lages, Ingo, 31224 Peine (DE)
(74) Vertreter: Scheffler, Jörg

(57) **Zusammenfassung**

Die Erfindung betrifft ein Verfahren und eine Vorrichtung (1) zur Erfassung von Objekten (2) innerhalb eines Erfassungsbereiches (3). Hierzu wird ein Infrarot-Lichtsignal (7) von einem Sender (4) emittiertet und nach einer Reflexion an einem Objekt (2) mittels eines Empfängers (5) detektiert. Um mögliche Fehlinterpretationen, insbesondere durch verschiedene bewegliche und unbewegliche Objekte (2) innerhalb des Erfassungsbereiches (3) zu vermeiden, wird vorgeschlagen, nacheinander unterschiedliche Erfassungsbereiche (3) durch eine Veränderung des emittierten und / oder detektierten Signalpegels zu überwachen. Hierdurch wird eine mögliche Veränderung der Objektposition erfasst. Dabei ist die bei Infrarot-Signalen (7) aufwendige Erfassung der Laufzeit zur Bestimmung des Objektsabstandes entbehrlich. Zugleich kann auf kostengünstig verfügbare Bauelemente aus der Infrarot-Technik zurückgegriffen werden.

## Beschreibung

Die Erfindung betrifft ein Verfahren zur Erfassung von Objekten innerhalb eines Erfassungsbereiches durch ein von einem Sender, insbesondere im Infrarotbereich emittiertes und nach einer Reflexion an dem Objekt mittels eines Empfängers detektiertes Lichtsignal. Weiterhin betrifft die Erfindung eine Vorrichtung zur Durchführung des Verfahrens.

In der Haustechnik zur Überwachung von Fertigungs- und Verteilungsprozessen werden solche Infrarot-Lichtschranken für eine berührungslose Objekterfassung vielfach eingesetzt und sind damit durch offenkundige Vorbenutzung bekannt. Dabei wird der von dem Infrarot-Sender erzeugte Infrarot-Lichtstrahl durch das zu erfassende Objekt reflektiert und anschließend von dem Empfänger detektiert. Sofern sich ein Objekt innerhalb des Erfassungsbereiches befindet, liegt der dabei erfasste Signalpegel über einem vorgegebenen Grenzwert. Anderenfalls wird kein Empfangssignal detektiert.

Als nachteilig erweist es sich in der Praxis jedoch, dass es zu Fehlinterpretationen kommen kann, wenn sich mehrere Objekte im Erfassungsbereich befinden. Beispielsweise werden dabei mehrere Objekte aufgrund ihrer mangelnden Differenzierbarkeit als identisch interpretiert, so dass der Einsatz solcher Infrarot-Lichtschranken eine objektbezogene Steuerung bisher nicht zulässt. Zudem werden auch unbewegliche Objekte im Erfassungsbereich als Empfangssignal detektiert, wodurch es zu Fehlfunktionen kommen kann.

Um solche Fehler zu vermeiden, ist es bereits bekannt, über die Laufzeit des Signals auf die Entfernung des Objektes zu schließen, um so beispielsweise bewegliche von unbeweglichen Objekten unterscheiden zu können. Aufgrund der hohen Lichtgeschwindigkeit stehen derzeit jedoch noch keine geeigneten Komponenten zur Verfügung, um einen vergleichsweise kleinen Erfassungsbereich von lediglich wenigen Metern überwachen zu können.

Es ist ferner bereits bekannt, solche Entfernungsmessungen mittels einer Ultraschallsensorik zu überwachen. Das Ultraschallsignal ist dabei auch für vergleichsweise kleine Erfassungsbereiche geeignet, weil die im Vergleich zur Lichtgeschwindigkeit geringe Geschwindigkeit des Ultraschallsignals mit den verfügbaren elektronischen Komponenten problemlos ausgewertet werden kann. Die Laufgeschwindigkeit des Ultraschallsignales ist jedoch in einem hohen Maße temperaturabhängig, so dass Fehlfunktionen nicht ausgeschlossen werden können. Zudem sind die erforderlichen Bauelemente einer solchen Ultraschallanordnung vergleichsweise teuer, so dass deren Einsatz nur für hochwertige Investitionsgüter wirtschaftlich sinnvoll ist.

Der Erfindung liegt die Aufgabe zugrunde, ein Verfahren zu entwickeln, durch welches mögliche Fehlinterpretationen bei dem Einsatz von insbesondere Infrarot-Lichtsignalen weitgehend ausgeschlossen sind. Insbesondere sollen dadurch bewegliche von unbeweglichen Objekten unterscheidbar sein. Weiterhin liegt der Erfindung die Aufgabe zugrunde, eine Vorrichtung zur Durchführung des Verfahrens zu schaffen.

Die erstgenannte Aufgabe wird erfindungsgemäß mit einem Verfahren gemäß den Merkmalen des Patentanspruchs 1 gelöst. Die Unteransprüche 1 bis 9 betreffen besonders zweckmäßige Weiterbildungen des Verfahrens.

Erfindungsgemäß ist also ein Verfahren vorgesehen, bei dem unterschiedliche Erfassungsbereiche durch eine Veränderung des emittierten und / oder detektierten Signalpegels erfasst werden. Hierdurch können Veränderungen in der Position des Objektes dadurch erkannt werden, dass diese durch die Veränderung des Signalpegels unterschiedlichen Erfassungsbereichen zugeordnet werden können. Die Veränderung des detektierten Signalpegels erfolgt dabei insbesondere durch eine Variation der Empfängerempfindlichkeit. Durch die Auswertung der nacheinander überwachten Erfassungsbereiche hinsichtlich des detektierten Signals kann daher auf die Entfernung des Objektes geschlossen oder die Veränderung der Objektposition und damit die Bewegung des Objektes erfasst werden. Zudem können mehrere Objekte, die insbesondere zu der Sender-Empfängereinheit verschieden beabstandet sind, unterschieden werden. Fehlinterpretationen bei dem Einsatz von Infrarot-Lichtsignalen werden so weitgehend ausgeschlossen.

Dabei erweist es sich als besonders praxisnah, wenn in mehreren aufeinanderfolgenden Zyklen jeweils verschiedene Erfassungsbereiche durch eine Variation des emittierten oder detektierten Signalpegels erfasst werden und durch vergleichende Betrachtung der jeweiligen Erfassungsbereiche mehrerer Zyklen eine Veränderung der Objektposition ermittelt wird. Hierdurch können in einfacher Weise bewegliche von unbeweglichen Objekten unterschieden und gegebenenfalls eine Annäherung des Objektes erkannt werden. Zugleich werden unbewegliche Objekte einem bestimmten Erfassungsbereich eindeutig zugeordnet, so dass bei nachfolgenden Messungen beispielsweise das in diesem Erfassungsbereich identifizierte Objekt bei der Erstellung von Steuersignalen ausgeschlossen werden kann.

Besonders einfach ist es auch, wenn die in übereinstimmenden Erfassungsbereichen aufeinanderfolgender Zyklen erfassten Signalpegel verglichen werden, um so eine schnelle Unterscheidung von beweglichen und unbeweglichen Objekten zu ermöglichen.

Eine weitere besonders vorteilhafte Ausführungsform des erfindungsgemäßen Verfahrens wird auch dadurch erreicht, dass der Erfassungsbereich schrittweise vergrößert oder verkleinert wird. Hierdurch wird die Auswertung der Signale wesentlich vereinfacht, indem der Erfassungsbereich schrittweise verändert wird, wobei in der Praxis je nach Einsatzbedingungen zwischen 2 und 20 Stufen üblicherweise ausreichend sind. Dabei ist die Anzahl oder die jeweilige Reichweite der Erfassungsbereiche einstellbar. Jedem Signalpegel kann daher ein Erfassungsbereich zugeordnet werden, der beispielsweise in Abhängigkeit voreingestellter Referenzwerte oder der ermittelten Signalpegel vorhergehender Messungen festgelegt werden kann.

Zum Variieren des Signalpegels könnte die Empfängerleistung verändert oder dem Empfänger ein einstellbarer Filter vorgeschaltet werden. Besonders erfolgversprechend ist hingegen eine Abwandlung, bei der lediglich die Sendeleistung verändert wird. Hierdurch kann der Erfassungsbereich problemlos, beispielsweise durch vorgeschaltete Widerstände, eingestellt werden. Unterschiedliche Schrittweiten oder gezielt abgegrenzte Erfassungsbereiche können so problemlos realisiert werden.

Eine andere ebenfalls besonders zweckmäßig Abwandlung wird auch erreicht, indem das Infrarot-Lichtsignal als ein verschlüsseltes und eindeutig identifizierbares Signal ausgestaltet wird, um auf diese Weise einen Einfluss von Streulicht zu vermeiden. Insbesondere wird das so gekennzeichnete Signal von Umgebungslicht sowie von Lichtsignalen benachbarter Vorrichtungen unterscheidbar, so dass sich die Erfassungsbereiche verschiedener Vorrichtungen auch überschneiden können, ohne dass es zu Störungen kommen kann. Zur Signalmodulation eignet sich beispielsweise ein an sich bekanntes Trägerfrequenzverfahren.

Als besonders erfolgversprechend erweist es sich auch, wenn zur Verschlüsselung ein nach dem Zufallsprinzip ermittelter Startwert eingesetzt wird. Bei einem Verfahren mit einer Pseudo-Zufallsfolge kann die Trennung benachbarter Systeme erheblich verbessert werden, wenn der Zufallszahlengenerator bei jedem System oder bei jeder Systemstart mit einem anderen Wert geladen wird. Beispielsweise eignet sich bei der Verwendung eines Mikro-Controllers eine Vorgehensweise, bei der zunächst ein unabhängiger Oszillator, beispielsweise ein Watchdog, der mit dem Reset-Eingang des Controllers verbunden ist, in Betrieb gesetzt wird. Der Controller bearbeitet eine Endlosschleife, in der ein Zähler kontinuierlich inkrementiert wird. Nach einem Flankenwechsel des Oszillators wird der Controller zurückgesetzt, und das Applikationsprogramm wird neu gestartet. Der zu diesem Zeitpunkt im Zähler befindliche Startwert wird für die Initiierung des Zufallszahlengenerators verwendet. Da dieser Wert von den zeitbestimmenden Bauteilen des unabhängigen Oszillators und von der Taktfrequenz des Mikrocontrollers abhängt, ergeben sich von Gerät zu Gerät und von Start zu Start jeweils neue Zahlenwerte.

Eine andere besonders vorteilhafte Ausgestaltung des erfindungsgemäßen Verfahrens wird auch dann erreicht, wenn aufgrund der vergleichenden Betrachtung verschiedener Zyklen auf die Bewegungsrichtung oder die Bewegungsgeschwindigkeit des Objektes geschlossen wird. Hierdurch kann eine qualitative Unterscheidung der Objekte hinsichtlich ihrer Relevanz für die mit dem Verfahren zu steuernde Vorrichtung erfolgen. Beispielsweise kann eine zufällige oder ungewollte Annäherung in dem Erfassungsbereich von einer zielgerichteten Annäherung unterschieden und dadurch der Einsatzbereich des Verfahrens erweitert werden.

Die zweitgenannte Aufgabe, eine zur Erfassung von Objekten innerhalb eines Erfassungsbereiches durch ein von einem Sender emittiertes und nach einer Reflexion an dem Objekt mittels eines Empfängers detektiertes Infrarot-Lichtsignal zur Durchführung des Verfahrens zu schaffen, wird erfindungsgemäß durch einen auf unterschiedliche Signalpegel einstellbaren Sender und / oder Empfänger, zur Festlegung unterschiedlicher Erfassungsbereiche gelöst. Hierdurch kann einerseits der Erfassungsbereich an die jeweiligen Einsatzbedingungen optimal angepasst werden, andererseits können durch eine zyklische Wiederholung von Signalauswertungen bewegliche von unbeweglichen Objekten unterschieden werden. Funktionsstörungen durch unbewegliche Objekte innerhalb des Erfassungsbereiches können dadurch verhindert werden. Zudem kann mittels einer Auswerteinheit die Bewegungsgeschwindigkeit sowie die Bewegungsrichtung zumindest näherungsweise ermittelt werden. Die Einstellung des Empfängers auf unterschiedliche Signalpegel erfolgt dabei insbesondere durch eine Variation der Empfängerempfindlichkeit.

Dabei wird ein besonders vorteilhafter Einsatz durch eine Verwendung der Vorrichtung zur Steuerung eines Handtrockners erreicht. Hierdurch kann der unnötige Betrieb des Handtrockners, ausgelöst durch sich zufällig im Erfassungsbereich bewegende Personen, vermieden und dadurch Energiekosten reduziert werden. Weiterhin kann die Leistung des Handtrockners entsprechend dem ermittelten Abstand der Hände von dem Luftaustritt des Handtrockners verändert werden. Möglich sind darüber hinaus auch praktische Anwendungen bei einem automatischen Wasserhahn, einem elektrischen Seifenspender oder auch bei Datenübertragungseinrichtungen, beispielsweise bei einer drahtlosen Computermaus oder einer drahtlosen Tastatur.

Bei einer Verwendung der Vorrichtung zur Steuerung eines automatischen Türöffners ermöglicht die Vorrichtung zudem die Bestimmung der Bewegungsrichtung, so dass die Tür beispielsweise bei solchen Personen, die sich quer zur Durchgangsrichtung bewegen, nicht öffnet. Bei sich schnell nähernden Personen kann zudem die Öffnungsbewegung der Tür beschleunigt werden.

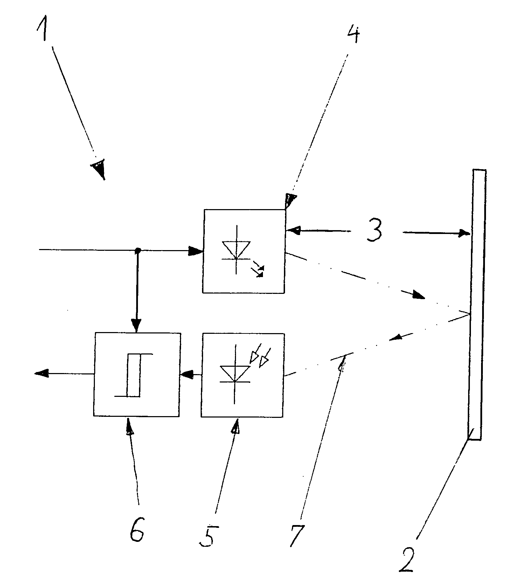

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipskizze eine Vorrichtung 1 zur Erfassung von Objekten 2 innerhalb eines Erfassungsbereiches 3. Die Vorrichtung 1 ist mit einem Sender 4, der ein Dauersignal oder ein Pulsmuster emittiert und mit einem Empfänger 5 sowie mit einer Auswerteinheit 6 ausgestattet. Um mit der Vorrichtung 1 bewegliche von unbeweglichen Objekten 2 unterscheiden zu können, wird der Signalpegel eines von dem Sender 4 emittierten InfrarotSignales 7 stufenweise erhöht, so dass mit jeder Stufe ein erweiterter Erfassungsbereich 3 einhergeht. Eine Wiederholung eines solchen Messzyklus' ermöglicht eine vergleichende Betrachtung, aus der neben einer Positionsänderung des Objektes 2 auch eine Bewegungsrichtung oder eine Bewegungsgeschwindigkeit zumindest näherungsweise abgeleitet werden kann.

## Patentansprüche

1. Verfahren zur Erfassung von Objekten (2) innerhalb eines Erfassungsbereiches (3) durch ein von einem Sender (4), insbesondere im Infrarotbereich emittiertes und nach einer Reflexion an dem Objekt (2) mittels eines Empfängers (5) detektiertes Lichtsignal (7), **dadurch gekennzeichnet, dass** unterschiedliche Erfassungsbereiche (3) durch eine Veränderung des emittierten und / oder detektierten Signalpegels erfasst werden.

2. Verfahren nach Anspruch 1, **dadurch gekennzeichnet, dass** in mehreren aufeinanderfolgenden Zyklen jeweils verschiedene Erfassungsbereiche (3) durch eine Variation des emittierten oder detektierten Signalpegels erfasst werden und dass durch vergleichende Betrachtung der jeweiligen Erfassungsbereiche (3) mehrerer Zyklen eine Veränderung der Objektposition ermittelt wird.

3. Verfahren nach den Ansprüchen 1 oder 2, **dadurch gekennzeichnet, dass** die in übereinstimmenden Erfassungsbereichen (3) aufeinanderfolgender Zyklen erfassten Signalpegel verglichen werden.

4. Verfahren nach zumindest einem der vorhergehenden Ansprüche, **dadurch gekennzeichnet, dass** der Erfassungsbereich (3) schrittweise vergrößert oder verkleinert wird.

5. Verfahren nach zumindest einem der vorhergehenden Ansprüche, **dadurch gekennzeichnet, dass** die Anzahl oder die jeweilige Reichweite der Erfassungsbereiche (3) einstellbar ist.

6. Verfahren nach zumindest einem der vorhergehenden Ansprüche, **dadurch gekennzeichnet, dass** lediglich die Sendeleistung verändert wird.

7. Verfahren nach zumindest einem der vorhergehenden Ansprüche, **dadurch gekennzeichnet, dass** das Infrarot-Lichtsignal (7) als ein verschlüsseltes und eindeutig identifizierbares Signal ausgestaltet wird.

8. Verfahren nach Anspruch 7, **dadurch gekennzeichnet, dass** zur Verschlüsselung ein nach dem Zufallsprinzip ermittelter Startwert eingesetzt wird.

9. Verfahren nach zumindest einem der vorhergehenden Ansprüche, **dadurch gekennzeichnet, dass** aufgrund der vergleichenden Betrachtung verschiedener Zyklen auf die Bewegungsrichtung oder die Bewegungsgeschwindigkeit des Objektes (2) geschlossen wird.

10. Vorrichtung (1) zur Erfassung von Objekten (2) innerhalb eines Erfassungsbereiches (3) durch ein von einem Sender (4), insbesondere im Infrarotbereich emittiertes und nach einer Reflexion an dem Objekt (2) mittels eines Empfängers (5) detektiertes Lichtsignal (7), **gekennzeichnet durch** einen auf unterschiedliche Signalpegel einstellbaren Sender (4) und / oder Empfänger (5), zur Festlegung unterschiedlicher Erfassungsbereiche (3).

11. Verwendung der Vorrichtung (1) nach Anspruch 10 zur Steuerung eines Handtrockners.

12. Verwendung der Vorrichtung (1) nach Anspruch 10 zur Steuerung eines automatischen Türöffners.
